# EUROPEAN PATENT APPLICATION

(11) **EP 2 612 940 A1**
(43) Date of publication of application: **10.07.2013**
(21) Application number: 11821545.8
(22) Date of filing: 12.08.2011
(51) Int. Cl.: C22C 38/00, B22F 1/00, B22F 3/00, C22C 33/02, H01F 1/053, H01F 41/02

(54) **ALLOY MATERIAL FOR R-T-B-BASED RARE EARTH PERMANENT MAGNET, PRODUCTION METHOD FOR R-T-B-BASED RARE EARTH PERMANENT MAGNET, AND MOTOR**

(30) Priority: 03.09.2010 JP 2010198171
(71) Applicant: Showa Denko K.K., Tokyo 105-8518 (JP)
(72) Inventor: NAKAJIMA Kenichiro, Chichibu-shi Saitama 369-1893 (JP); YAMAZAKI Takashi, Chichibu-shi Saitama 3691893 (JP)
(74) Representative: Strehl Schübel-Hopf & Partner
(86) International application number: PCT/JP2011/068411
(87) International publication number: WO 2012/029527

(57) **Abstract**

The present invention provides an alloy material for an R-T-B-based rare earth permanent magnet in which a high level of coercivity (Hcj) can be obtained, and a method for producing an R-T-B-based rare earth permanent magnet using the same that exhibits excellent productivity.

The present invention relates to an alloy material for an R-T-B-based rare earth permanent magnet, in terms of an R-T-B-based alloy composed of R being two or more members selected from rare earth elements, T being a transition metal that essentially contains Fe, B and unavoidable impurities, including an R-T-B-based alloy in which the Dy content is more than 10 % by mass and less than 31 % by mass, and a metal powder.

## Description

### TECHNICAL FIELD

The present invention relates to an alloy material for an R-T-B-based rare earth permanent magnet, a method for producing an R-T-B-based rare earth permanent magnet, and a motor, in particular, to an alloy material for an R-T-B-based rare earth permanent magnet from which an R-T-B-based rare earth permanent magnet having a superior magnetic properties and being suitably used for a motor can be obtained, to a method for producing an R-T-B-based rare earth permanent magnet that uses the same, and to a motor that uses the same.
Priority is claimed on Japanese Patent Application No. 2010-198171, filed September 3, 2010, the content of which is incorporated herein by reference.

### BACKGROUND ART

Conventionally, R-T-B-based rare earth permanent magnets (hereafter, referred to as "R-T-B-based magnet") are used in motors such as a voice coil motor in hard disk drives. A motor in which an R-T-B-based magnet is incorporated into a rotor thereof exhibits high energy efficiency. In recent years, since demand for energy conservation has increased, and the heat tolerance of R-T-B-based magnets has been enhanced, the usage of R-T-B-based magnets used in various types of motors such as home appliances, air-conditioners and automobiles has been increased.

In general, an R-T-B-based magnet can be obtained by pressing an R-T-B-based alloy containing Nd, Fe, and B serving as its primary component, followed by sintering. Typically, R in an R-T-B-based alloy is configured with Nd and elements where a part of Nd has been substituted with another rare earth element such as Pr, Dy, and Tb. T is configured with Fe and elements where a part of Fe has been substituted with another transition metal such as Co and Ni. B denotes boron, and a part thereof may be substituted either with C or N.
The R-T-B-based magnet is usually configured with two phases, which are a main phase constituted by R₂T₁₄B, and a Nd-rich phase existing in a grain boundary of the main phase and having a higher concentration of Nd than the main phase. The Nd-rich phase is also referred to as a "grain boundary phase".

Since an R-T-B-based magnet used in motors for a hybrid automobile, an electrical automobile and the like is exposed to high temperature in the motor, high coercivity (Hcj) is required. As a technique to improve coercivity of the R-T-B-based magnet, in R of an R-T-B-based alloy, Nd is substituted with Dy or Tb.
Further, as techniques to improve coercivity of the R-T-B-based magnet without increasing the content of Dy contained in the R-T-B-based alloy, a method in which Dy is deposited from the outside of the sintered body of the R-T-B-based alloy, followed by being diffused into the grain boundary inside thereof (for example, refer to Patent Documents 1 and 2), a method in which a fluoride of Dy or the like is applied to the surface of the sintered body of the R-T-B-based alloy (for example, refer to Patent Document 3), and a method in which raw materials having high Dy concentration are added, thereby obtaining a core-shell structure (for example, refer to Non-Patent Document 1) have been studied.

Furthermore, in terms of coercive force mechanism of the R-T-B-based magnet, results in which the effect of a heat treatment is inspected have been reported. Specifically, a result in which an extremely thin amorphous layer is formed on a grain boundary by a heat treatment to have a Cu-condensed phase exist together with a Nd-rich phase (for example, refer to Non-Patent Document 2), and a result in which a liquid phase is caused by existence of Cu, thereby improving wettability among Nd-rich phases (for example, refer to Non-Patent Document 3) have been reported.

In general, when an R-T-B-based magnet is manufactured, an alloy having a fine structure is pulverized to a size of 4 to 6 µm using a jet mill or the like, pressed and sintered whilst orientating it in a magnetic field.
Further, when an alloy is pulverized, the alloy is crushed such that a powder thereof has a size of 3 µm or less. It has also been found that by reducing the size of the magnet grain after sintering, coercivity is improved, thereby reducing the usage of Dy (for example, refer to Patent Document 4).

### [Documents of Related Art]

### [Patent Documents]

[Patent Document 1] WO 2007/088718
[Patent Document 2] WO 2008/032667
[Patent Document 3] Japanese Patent Publication No.4450239
[Patent Document 4] Japanese Unexamined Patent Application, First Publication No.2008-2633243

### [Non-Patent Documents]

[Non-Patent Document 1] Sugimoto, J. Jpn. Soc. Powder Powder Metallurgy, Vol.57, No.6, pp395-400 (2010)
[Non-Patent Document 2] W.F.Li et.al, Acta Materialia, 57, pp1337-1346 (2009)
[Non-Patent Document 3] Matsuura et. al., The Papers of Technical Meeting on Magnetics, The Institute of Electrical Engineers of Japan, Vol.MAG-09, No.168-189, pp77-81 (2009)

### SUMMARY OF THE INVENTION

### [Problems to be Solved by the Invention]

However, coercivity of the R-T-B-based magnet is inadequate in the prior art, and further improvement of coercivity in the R-T-B-based magnet has been demanded.
In detail, for example, when the Dy concentration in the R-T-B-based alloy is increased, an R-T-B-based magnet having a high coercivity (Hcj) can be obtained after sintering. However, when Dy content in the R-T-B-based alloy exceeds 10 % by mass, it is difficult to exhibit the effect of improving coercivity by increasing the Dy content. Therefore, it is difficult to sufficiently enhance a coercivity of the R-T-B-based magnet only by increasing the Dy content in the R-T-B-based alloy.

In addition, in order to improve coercivity of the R-T-B-based magnet without increasing the content of Dy contained in the R-T-B-based alloy, a technique in which Dy is deposited on the sintered body thereof, followed by being diffused into the grain boundary inside thereof is used; however, the surface of the sintered body loses the smoothness thereof by diffusing Dy in the surface of the sintered body into the grain boundary. Hence, additional process is necessary. Therefore, there is a problem in that fabrication of the R-T-B-based magnet requires a lot of labor, thus reducing productivity thereof.

The present invention takes into consideration the above circumstances with an object of providing an alloy material for an R-T-B-based rare earth permanent magnet in which a high level of coercivity (Hcj) can be obtained, and a method for producing an R-T-B-based rare earth permanent magnet using the same that exhibits excellent productivity.
Moreover, an object of the present invention is to also provide a motor that uses the R-T-B-based rare earth permanent magnet having excellent magnetic properties, which is produced using the above method for producing an R-T-B-based rare earth permanent magnet.

### [Means of Solving the Problems]

For solving the above-mentioned problems, the inventors of the present invention devoted themselves to keen research focusing on an R-T-B-based alloy containing Dy over 10 % by mass, and coercivity of the R-T-B-based magnet produced using the R-T-B-based alloy. As a result, it was found that if the Dy concentration in the R-T-B-based alloy is increased, grain boundary phases in the R-T-B-based magnet obtained after sintering are agglomerated to reduce dispersion of the grain boundary phases. Further, it was also found that when dispersion of the grain boundary phases is reduced, the main phases (R₂T₁₄B phase) are sufficiently isolated from each other but do not exhibit sufficient coercivity.

Therefore, the inventors of the present invention devoted themselves to keen research to improve dispersion of the grain boundary phases. As a result, the present inventors found that when a material before sintering to be used to produce the R-T-B-based magnet includes an R-T-B-based alloy and a metal powder, dispersion of the grain boundary phases in the R-T-B-based magnet obtained after sintering is improved to enhance coercivity, and consequently achieved the present invention.
It is presumed that the following contribute to these effects. When an alloy material for the permanent magnet including the R-T-B-based alloy and the metal powder is pressed, followed by being sintered to manufacture an R-T-B-based magnet, metal contained in the metal powder penetrates into the grain boundary phase of the R-T-B-based magnet during sintering. Therefore, the metal concentration within the grain boundary phase is increased to improve wettability of the grain boundary phase. Accordingly, the grain boundary phase readily comes around between main phase particles to uniformly disperse the grain boundary phases in the R-T-B-based magnet.

That is to say, the present invention provides each of the following aspects of the invention.
(1) An alloy material for an R-T-B-based rare earth permanent magnet composed of: R being two or more members selected from rare earth elements; T being a transition metal that essentially contains Fe; B; and unavoidable impurities, and including: an R-T-B-based alloy in which the Dy content is more than 10 % by mass and less than 31 % by mass; and a metal powder.

(2) The alloy material for an R-T-B-based rare earth permanent magnet according to (1), wherein the metal powder is one member, or two or more members selected from the group consisting of Fe, Al, Co, Mo, Ta, Zr and W.
(3) The alloy material for an R-T-B-based rare earth permanent magnet according to (1) or (2), wherein the amount of the metal powder is 0.02 % by mass or more and less than 6 % by mass.
(4) The alloy material for an R-T-B-based rare earth permanent magnet according to any one of (1) to (3), wherein a powder composed of the R-T-B-based alloy and the metal powder is mixed to form a mixture thereof.

(5) A method for producing an R-T-B-based rare earth permanent magnet including: pressing an alloy material for an R-T-B-based rare earth permanent magnet according to any one of (1) to (4); and sintering the alloy material.
(6) A motor provided with the R-T-B-based rare earth permanent magnet produced using the method for producing an R-T-B-based rare earth permanent magnet according to (5).

### [Effect of the Invention]

The alloy material for an R-T-B-based rare earth permanent magnet according to the present invention includes an R-T-B-based alloy in which the Dy content is more than 10 % by mass and less than 31 % by mass; and a metal powder. Therefore, when it is pressed, and followed by being sintered, it is readily possible to provide an R-T-B-based rare earth permanent magnet having sufficiently high coercivity (Hcj) and exhibiting excellent magnetic properties to be suitably used for a motor.

### BRIEF DESCRIPTION OF THE DRAWINGS

FIG. 1 is a backscattered electron image of the cross-section of an R-T-B-based rare earth permanent magnet according to Experimental Example 3.
FIG. 2 is a backscattered electron image of the cross-section of an R-T-B-based rare earth permanent magnet according to Experimental Example 4.

### MODE FOR CARRYING OUT THE INVENTION

Hereunder, an embodiment of the present invention is described in detail.
"Alloy material for R-T-B-based rare earth permanent magnet"
The alloy material for an R-T-B-based rare earth permanent magnet (hereafter, referred to as "alloy material for the permanent magnet") of the present embodiment includes an R-T-B-based alloy and a metal powder. The R-T-B-based alloy contained in the alloy material for the permanent magnet is composed of R being two or more members selected from rare earth elements, T being a transition metal that essentially contains Fe, B (boron) and unavoidable impurities.
In addition, with respect to the present embodiment, R constituting the R-T-B-based alloy includes Dy. The content of Dy contained in the R-T-B-based alloy is more than 10 % by mass and less than 31 % by mass.

The composition of the R-T-B-based alloy is not particularly limited, but in order to obtain an R-T-B-based magnet having excellent magnetic properties, it is preferable that R be 27 to 35 % by mass or more preferably 30 to 32 % by mass, B be 0.85 to 1.3 % by mass or more preferably 0.87 to 0.98 % by mass, and T be the remnant and unavoidable impurities.
When R contained in the R-T-B-based alloy is less than 27 % by mass, coercivity of the R-T-B-based magnet obtained using it may become insufficient in some cases. On the other hand, when R exceeds 35 % by mass, remanence (Br) of the R-T-B-based magnet may become insufficient in some cases.
Further, when B contained in the R-T-B-based alloy is less than 0.85 % by mass, coercivity of the R-T-B-based magnet obtained using it may become insufficient in some cases. On the other hand, when B exceeds 1.3 % by mass, remanence of the R-T-B-based magnet may be remarkably reduced.

An example of rare earth elements other than Dy contained in R of the R-T-B-based alloy includes Sc, Y, La, Ce, Pr, Nd, Pm, Sm, Eu, Gd, Tb, Ho, Er, Tm, Yb and Lu. Of these, Nd, Pr and Tb are particularly desirable. In addition, R of the R-T-B-based alloy preferably contains Nd serving as the primary component thereof.

The content of Dy contained in the R-T-B-based alloy is more than 10 % by mass and less than 31 % by mass, Dy is preferably contained therein at more than 10 % by mass to 25 % by mass, and more preferably at more than 10 % by mass to 21 % by mass. When the content of Dy contained in R-T-B-based alloy is not less than 31 % by mass, even in the case of an alloy material for the permanent magnet containing the metal powder, it consequently becomes impossible to obtain the effect of improving coercivity of the R-T-B-based magnet by increasing the Dy content, and also remanence (Br) thereof is remarkably reduced. On the other hand, when Dy is contained in the R-T-B-based alloy at more than 10 % by mass, an R-T-B-based magnet having extremely high coercivity can be obtained.

T contained in the R-T-B-based alloy denotes a transition metal that essentially contains Fe. As a transition metal other than Fe contained in T of the R-T-B-based alloy, Co and Ni can be mentioned. If Co is contained in T of the R-T-B-based alloy in addition of Fe, it is preferable because the Tc (Curie temperature) can be improved.
In addition, B contained in the R-T-B-based alloy denotes boron; however, a part thereof may be substituted either with C or N.

In order to improve the coercivity of the R-T-B-based magnet, the R-T-B-based alloy preferably contains one member, or two or more members selected from the group consisting of Al, Cu, and Ga.
Ga is to be contained in the R-T-B-based alloy preferably at 0.03 % by mass to 0.3 % by mass. If Ga is contained in the R-T-B-based alloy at 0.03 % by mass or more, the coercivity of the R-T-B-based magnet can be effectively improved. Therefore, it is preferable. However, it is not preferable if the Ga content in the R-T-B-based alloy exceeds 0.3 % by mass, because remanence of the R-T-B-based magnet is reduced.

Further, the oxygen concentration of the alloy material for the permanent magnet is preferably as low as possible. However, even when the oxygen concentration in the alloy material for the permanent magnet is 0.03 % by mass to 0.5 % by mass, a sufficient level of magnetic properties can be achieved. When the oxygen content contained in the alloy material for the permanent magnet exceeds 0.5 % by mass, there is a possibility that the magnetic properties may be significantly reduced. The oxygen content contained in the alloy material for the permanent magnet is preferably 0.05 % by mass to 0.2 % by mass.

Furthermore, the carbon concentration of the alloy material for the permanent magnet is preferably as low as possible. However, even when the carbon concentration in the alloy material for the permanent magnet is 0.003 % by mass to 0.5 % by mass, a sufficient level of magnetic properties can be achieved. If the carbon content contained in the alloy material for the permanent magnet exceeds 0.5 % by mass, then there will be a possibility that the magnetic characteristic may be significantly reduced. The carbon content contained in the alloy material for the permanent magnet is preferably 0.005 % by mass to 0.2 % by mass.

The R-T-B-based alloy contained in the alloy material for the permanent magnet of the present embodiment may be obtained by mixing 2 or more alloys having different composition in terms of components such as rare earth concentration and B concentration, may be an R-T-B-based alloy finally obtained by mixing an alloy based on R-T-B and an alloy based on R-T, or may be a single R-T-B-based alloy.

Further, the alloy material for the permanent magnet according to the present embodiment is preferably a mixed material of a powder composed of an R-T-B-based alloy and a metal powder.
The powder composed of the R-T-B-based alloy may be obtained, for example, by a method in which a molten alloy melt is cast by means of an SC (strip casting) method to manufacture a cast alloy thin strip, the obtained cast alloy thin strip is then crushed, for example, by means of a hydrogen decrepitation method, and it is then pulverized using a pulverizer.
A case of manufacturing an R-T-B-based alloy using an SC method was described in the present embodiment; however, the R-T-B-based alloy used in the present invention is not to be considered as limited to one that is manufactured using an SC method. For example, an R-T-B-based alloy may also be cast by means of a centrifugal casting method, a book mold, and the like.

Examples of the hydrogen decrepitation method include a method in which, after having absorbed hydrogen in a cast alloy thin strip at room temperature and heat-treated it at a temperature of approximately 300 °C, hydrogen is degassed by depressurization, and then it is heat-treated at a temperature of approximately 500°C to thereby remove the hydrogen in the cast alloy thin strip. In the hydrogen decrepitation method, the cast alloy thin strip having absorbed hydrogen expands in volume, and consequently a number of cracks are generated in the cast alloy therein and the cast iron strip is thereby crushed.

Moreover, examples of the method of pulverizing the hydrogen decrepitated cast alloy thin strip include a method in which on a pulverizer such as a jet mill, the hydrogen decrepitated cast alloy thin strip is fine-pulverized to an average grain size of 3 to 4.5 µm using highly pressurized nitrogen, for example at 0.6 MPa, to thereby prepare it in a powder form.
When the R-T-B-based alloy is obtained by mixing 2 or more alloys having different composition, in pulverization of the R-T-B-based alloy, each alloy to be mixed may be pulverized, followed by mixing, or a part or all of 2 or more alloys may be mixed, followed by being pulverized.

Further, as examples of the metal powder contained in the alloy material for the permanent magnet, Al, Co, Fe, Mo, Ni, Si, Ta, Ti, W, Zr and the like can be used. One member, or two or more members selected from the group consisting of Fe, Al, Co, Mo, Ta, Zr and W are preferable.

The metal powder is preferably contained at 0.02 to less than 6 % by mass within the alloy material for the permanent magnet, and more preferably at 0.02 to 2 % by mass. When the content of the metal powder in the alloy material for the permanent magnet is less than 0.02 % by mass, there is a concern that effects of improving coercivity (Hcj) of the R-T-B-based magnet can not be sufficiently obtained. On the other hand, it is not preferable when the content of the metal powder is not less than 6 % by mass, because the magnetic properties of the R-T-B-based magnet such as remanence (Br) and maximum energy product (BHmax) are significantly reduced.

Further, the average grain size (d50) of the metal powder included in the alloy material for the permanent magnet is preferably in a range of 0.01 to 50 µm. The metal powder in the alloy material for the permanent magnet may or may not be finely and uniformly distributed, and for example, the grain size thereof may be 1 µm or greater, or it may be aggregated in a size of 5 µm or greater.

The alloy material for the permanent magnet of the present embodiment can be produced using the aforementioned method in which the powder composed of the R-T-B-based alloy and the metal powder are mixed.
The R-T-B-based alloy and the metal powder constituting the alloy material for the permanent magnet, as described above, may be mixed after having cracked a cast alloy thin strip and prepared as a powder composed of the R-T-B-based alloy. However, for example, the cast alloy thin strip and the metal powder may be mixed to thereby prepare as an alloy material for the permanent magnet before cracking the cast alloy thin strip, and then the alloy material for the permanent magnet that contains the cast alloy thin strip may be cracked. In this case, it is preferable that the alloy material for the permanent magnet composed of the cast alloy thin strip and the metal powder be cracked in a manner similar to the method of cracking the cast alloy thin strip, thereby forming the powder thereof.

Next, a method for producing an R-T-B-based rare earth permanent magnet using the alloy material for the permanent magnet obtained in this way is described.
"Method for producing R-T-B-based rare earth permanent magnet"
Examples of a method of producing an R-T-B-based magnet according to the present embodiment include a method in which 0.02 to 0.03 % by mass of zinc stearate is added as a lubricating agent to the aforementioned alloy material for the permanent magnet, it is pressed using a pressing machine while applying a transverse magnetic field and is sintered in a vacuum at 1,030 to 1,200 °C, and is then heat-treated at 400 to 800 °C.

The R-T-B-based alloy and the metal powder, as described above, may be mixed after having cracked a cast alloy thin strip and prepared as a powder composed of the R-T-B-based alloy. However, for example, mixing of the R-T-B-based alloy and the metal powder may be conducted after having added a lubricating agent such as zinc stearate to the powder composed of the R-T-B-based alloy.

The alloy material for the permanent magnet of the present embodiment is composed of R being two or more members selected from rare earth elements, T being a transition metal that essentially contains Fe, B and unavoidable impurities, and includes an R-T-B-based alloy in which the Dy content is more than 10 % by mass and less than 31 % by mass, and a metal powder. Therefore, the R-T-B-based magnet obtained using it is improved in terms of dispersion of the grain boundary phases to enhance coercivity of the R-T-B-based magnet. The reason for this is presumed as follows. When an alloy material for the permanent magnet of the present embodiment is pressed, followed by being sintered to manufacture an R-T-B-based magnet, the metal contained in the metal powder penetrates into the grain boundary phase constituting the R-T-B-based magnet during sintering. As a result, the metal concentration within the grain boundary phase is increased to improve wettability of the grain boundary phase in the R-T-B-based magnet. Accordingly, the grain boundary phases are uniformly dispersed in the R-T-B-based magnet.

Further, in the alloy material for the permanent magnet of the present embodiment, when the metal powder is one member, or two or more members selected from the group consisting of Fe, Al, Co, Mo, Ta, Zr and W, wettability of the grain boundary phase in the R-T-B-based magnet obtained using it is effectively improved to uniformly disperse the grain boundary phases in the R-T-B-based magnet.
Furthermore, in the alloy material for the permanent magnet of the present embodiment, when the metal powder is contained therein at 0.02 % by mass or more and less than 6 % by mass, the content of Dy in the R-T-B-based alloy is increased. As a result, it is preferable because effects of improving coercivity (Hcj) of the R-T-B-based magnet can be sufficiently obtained. In addition, it is preferable because by increasing the content of Dy in the R-T-B-based alloy, a decrease of the magnetic properties of the R-T-B-based magnet such as remanence (Br) and maximum energy product (BHmax) is suppressed.

Moreover, when the alloy material for the permanent magnet according to the present embodiment is a mixed material of a powder composed of an R-T-B-based alloy and a metal powder, an alloy material for the permanent magnet having uniform quality can readily be obtained only by mixing the powder of the R-T-B-based alloy and the metal powder. By pressing and sintering it, an R-T-B-based magnet having uniform quality can readily be obtained.

Further, in the method of producing the R-T-B-based magnet according to the present embodiment, the alloy material for a rare earth magnet of the present embodiment is pressed and sintered, thereby producing the R-T-B-based magnet. Therefore, production of an R-T-B-based magnet exhibiting excellent coercivity to be suitably used for a motor can readily be achieved.

### EXAMPLES

An Nd metal (purity 99 wt% or greater), Pr metal (purity 99 wt% or greater), Dy metal (purity 99 wt% or greater), ferroboron (Fe 80wt%, B 20wt%), Co metal (purity 99 wt% or greater), Ga metal (purity 99 wt% or greater), Al metal (purity 99 wt% or greater), Cu metal (purity 99 wt% or greater), and iron mass (purity 99 wt% or greater) were weighed so as to correspond to the component composition of alloys A to I shown in Table 1, and were charged into an alumina crucible.

**[Table 1]**

| Alloy composition (wt%) | | | | | | | | | | |
|---|---|---|---|---|---|---|---|---|---|---|
| Alloy | Combined total of R | Nd | Pr | Dy | B | Co | Ga | Al | Cu | Fe |
| A | 31.0 | 16.2 | 4.7 | 10.2 | 0.900 | 2.1 | 0.1 | 0.2 | 0.1 | Balance |
| B | 31.3 | 15.0 | 2.9 | 12.3 | 0.900 | 2.1 | 0.1 | 0.2 | 0.1 | Balance |
| C | 31.7 | 13.5 | 2.9 | 15.2 | 0.910 | 2.1 | 0.1 | 0.2 | 0.1 | Balance |
| D | 32.0 | 12.4 | 2.2 | 17.3 | 0.910 | 2.1 | 0.1 | 0.2 | 0.1 | Balance |
| E | 32.4 | 10.5 | 1.0 | 20.9 | 0.930 | 2.0 | 0.1 | 0.2 | 0.1 | Balance |
| F | 31.2 | 5.6 | 1.5 | 24.0 | 0.953 | 2.0 | 0.1 | 0.1 | 0.1 | Balance |
| G | 31.4 | 0.0 | 0.0 | 31.3 | 0.928 | 2.0 | 0.1 | 0.1 | 0.1 | Balance |
| H | 30.5 | 24.5 | 6.0 | 0.0 | 0.900 | 0.1 | 0.1 | 1.0 | 0.1 | Balance |
| I | 30.5 | 15.0 | 6.0 | 9.5 | 0.900 | 1.0 | 0.1 | 0.1 | 0.1 | Balance |

Then, the alumina crucible was placed inside the furnace of a high-frequency vacuum induction furnace. The inside of the furnace was substituted with Ar, and heated to 1,450 °C to allow melting, thereby producing a melt of the alloys. Subsequently, the melt thereof was poured on a water-cooled copper roll, and an SC (strip casting) method was conducted such that the water-cooled copper roll was controlled at a peripheral speed of 1.0 m/second so as to have an average thickness of approximately 0.3 mm, a distance between R-rich phases (rare earth-rich phases) of 3 to 15 µm, and a volume ratio of a phase (the main phase) other than the R-rich phases > (138-1.6r) (wherein r is the content of rare earths (Nd, Pr, Dy)), to thereby obtain a cast alloy thin strip.

The distance between R-rich phases and the volume ratio of the main phase of the cast alloy thin strip thus obtained were examined by the following methods.
That is, the cast alloy thin strip having a thickness within an average thickness ± 10 % was embedded in a resin and, after polishing, a backscattered electron image was photographed using a scanning electron microscope (JEOL JSM-5310) to obtain a 300 times magnification micrograph. Using the obtained micrograph of the cast alloy thin strip, the distance between R-rich phases was measured and also the volume ratio of the main phase was calculated. As a result, the distance between R-rich phases of alloys A to I shown in Table 1 was from 4 to 5 µm, and the volume ratio of the main phase was from 90 to 95 %.

Next, the cast alloy thin strip was then crushed by means of a hydrogen decrepitation method described below. First, the cast alloy thin strip was coarse-crushed so that the diameter thereof became approximately 5 mm, and it was then inserted into a hydrogen atmosphere at room temperature to thereby have hydrogen absorbed therein. Subsequently, heat treatment was performed at 300 °C for the cast alloy thin strip that had been coarse-crushed and had occluded hydrogen, thereby being decrepitated by hydrogen. Then, hydrogen was degassed by depressurization, heat treatment was performed to further heat it to 500°C to thereby have hydrogen in the cast alloy thin strip released and removed, and then it was cooled to room temperature.

Next, 0.025 wt% of zinc stearate was added as a lubricating agent to the cracked cast alloy thin strip, and on a jet mill (Hosokawa Micron 100AFG), the cast alloy thin strip cracked by hydrogen decrepitation was fine-pulverized into powder at an average grain size of 4.5 µm, using highly pressurized nitrogen at 0.6 MPa.

A metal powder having the average grain size shown in Table 2 was added to and mixed with the powder (alloys A to I) composed of the R-T-B-based alloy obtained in this way, according to the proportion (concentration (% by mass) of the metal powder contained in the alloy material for the permanent magnet) shown in Table 3, to thereby manufacture the alloy material for the permanent magnet. The grain size of the metal powder was measured using a laser diffraction meter.

**[Table 2]**

| Metal powder | Average grain size (µm) |
|---|---|
| Al | 48 |
| Co | 5 |
| Fe | 6 |
| Mo | 13 |
| Ni | 47 |
| Si | 20 |
| Ta | 12 |
| Ti | 25 |
| W | 7 |
| Zr | 31 |

**[Table 3]**

| Experimental Example | Alloy | Metal powder | Additive amount (wt%) | Hcj (kOe) | Br (kG) | SR (%) | BHmax (MGOe) |
|---|---|---|---|---|---|---|---|
| 1 | A | None | 0.0 | 34.6 | 11.6 | 87.9 | 32.0 |
| 2 | | Fe | 2.0 | 35.3 | 11.6 | 87.6 | 32.3 |
| 3 | B | None | 0.0 | 35.4 | 10.7 | 92.7 | 28.5 |
| 4 | | Fe | 0.02 | 38.8 | 10.9 | 87.8 | 29.3 |
| 5 | | | 2.0 | 39.1 | 10.9 | 92.7 | 29.2 |
| 6 | | Al | 0.2 | 36.9 | 10.9 | 90.4 | 28.6 |
| 7 | | Co | 1.0 | 37.3 | 11.2 | 95.1 | 30.9 |
| 8 | | Mo | 1.0 | 38.0 | 10.8 | 90.8 | 28.7 |
| 9 | | Ta | 1.0 | 40.8 | 11.1 | 94.7 | 30.1 |
| 10 | | W | 1.0 | 39.0 | 12.1 | 95.1 | 35.8 |
| 11 | | Zr | 0.2 | 39.0 | 11.1 | 94.4 | 30.2 |
| 12 | C | None | 0.0 | 35.3 | 10.4 | 93.1 | 26.6 |
| 13 | | Fe | 1.0 | 40.7 | 10.1 | 92.7 | 25.1 |
| 14 | | | 2.0 | 36.3 | 9.5 | 93.7 | 22.6 |
| 15 | D | None | 0.0 | 41.3 | 10.1 | 88.3 | 25.1 |
| 16 | | Fe | 1.0 | 42.1 | 9.6 | 93.2 | 22.9 |
| 17 | | | 2.0 | 43.4 | 9.7 | 89.7 | 23.4 |
| 18 | E | None | 0.0 | 37.1 | 8.6 | 93.2 | 18.5 |
| 19 | | Fe | 1.0 | 39.7 | 8.7 | 93.8 | 19.0 |
| 20 | | | 2.0 | 41.9 | 8.9 | 93.3 | 19.7 |
| 21 | F | None | 0.0 | 25.3 | 8.0 | 68.9 | 15.4 |
| 22 | | Fe | 1.0 | 31.8 | 7.8 | 79.9 | 15.0 |
| 23 | | | 2.0 | 26.6 | 7.9 | 62.7 | 14.7 |
| 24 | G | None | 0.0 | 12.0 | 4.4 | 42.5 | 7.3 |
| 25 | | Fe | 1.0 | 11.4 | 4.2 | 41.3 | 6.9 |
| 26 | H | None | 0.0 | 14.6 | 14.2 | 95.6 | 48.3 |
| 27 | | | 4.0 | 11.2 | 13.8 | 93.2 | 43.7 |
| 28 | | Ta | 1.0 | 15.0 | 13.7 | 95.4 | 45.3 |
| 29 | | W | 2.0 | 14.0 | 13.3 | 91.9 | 41.3 |
| 30 | I | None | 0.0 | 29.8 | 11.7 | 90.8 | 33.2 |
| 31 | | Al | 0.2 | 34.0 | 11.5 | 92.7 | 32.8 |
| 32 | | Co | 1.0 | 32.3 | 11.8 | 91.3 | 34.1 |
| 33 | | Fe | 0.2 | 30.6 | 11.5 | 89.1 | 32.2 |
| 34 | | | 1.0 | 34.1 | 11.6 | 90.9 | 33.0 |
| 35 | | | 2.0 | 34.1 | 11.7 | 90.7 | 33.8 |
| 36 | | Ta | 1.0 | 34.0 | 11.5 | 90.7 | 32.7 |
| 37 | | | 2.0 | 33.8 | 11.3 | 89.2 | 32.0 |
| 38 | | W | 0.2 | 30.0 | 11.4 | 89.1 | 31.5 |
| 39 | | | 1.0 | 35.4 | 11.4 | 89.9 | 31.9 |
| 40 | | | 3.0 | 33.2 | 11.2 | 87.2 | 31.2 |
| 41 | | Zr | 0.2 | 34.0 | 11.5 | 91.3 | 32.5 |

Next, the alloy material for the permanent magnet obtained in this way was pressed at a pressure of 0.8 t/cm², using a pressing machine to apply a transverse magnetic field, to thereby prepare a powder compact, and then the powder compact was sintered in a vacuum. The sintering temperatures were different, depending on the alloys. In the alloys A and B, the powder compact thereof was sintered at 1,100 °C. In the alloy C, the powder compact thereof was sintered at 1,130 °C. In the alloys D, E and F, the powder compact thereof was sintered at 1,140 °C. In the alloy G, the powder compact thereof was sintered at 1,150 °C. In the alloy H, the powder compact thereof was sintered at 1,030 °C. In the alloy I, the powder compact thereof was sintered at 1,080 °C. Then, the powder compact was heat-treated at 800 °C and 530 °C, and was then cooled, to thereby obtain the R-T-B-based magnets of Experimental Example 1 to Experimental Example 41 shown in Table 3.

By using a BH curve tracer (Toei Kogyo TPM2-10), the magnetic properties of the respective R-T-B-based magnets of Experimental Example 1 to Experimental Example 41 that were obtained in this manner were measured. The results of this are shown in Table 3.
In Table 3, "Hcj" represents coercivity, "Br" represents remanence, "SR" represents squareness, and "BHmax" represents maximum energy product. Moreover, these values of magnetic properties are the average values of the measured values of the respective five R-T-B-based magnets.

As shown in Table 3, every one of the R-T-B-based magnets obtained using alloy materials for the permanent magnet including alloys A to F and I, and metal powders exhibited enhanced coercivity (Hcj) as compared to the R-T-B-based magnets obtained using alloy materials for the permanent magnet composed of alloys A to F and I without metal powders.

On the other hand, the R-T-B-based magnet of Experimental Example 25 obtained using the alloy material for the permanent magnet including the alloy G in which the Dy content thereof was 31 % by mass or more and the metal powder exhibited decreased coercivity (Hcj) as compared to the R-T-B-based magnet obtained using the alloy material for the permanent magnet of Experimental Example 24 composed of alloy G without metal powder.

Further, the R-T-B-based magnets of Experimental Examples 27 and 29 obtained using the alloy material for the permanent magnet including the alloy H containing no Dy and the metal powder exhibited decreased coercivity (Hcj) as compared to the R-T-B-based magnet of Experimental Example 26 obtained using the alloy material for the permanent magnet composed of the alloy H without the metal powder.
Furthermore, the R-T-B-based magnets of Experimental Examples 26 to 29 obtained using the alloy materials for the permanent magnet containing no Dy did not exhibit sufficiently high coercivity (Hcj) regardless of containing metal powders or not.

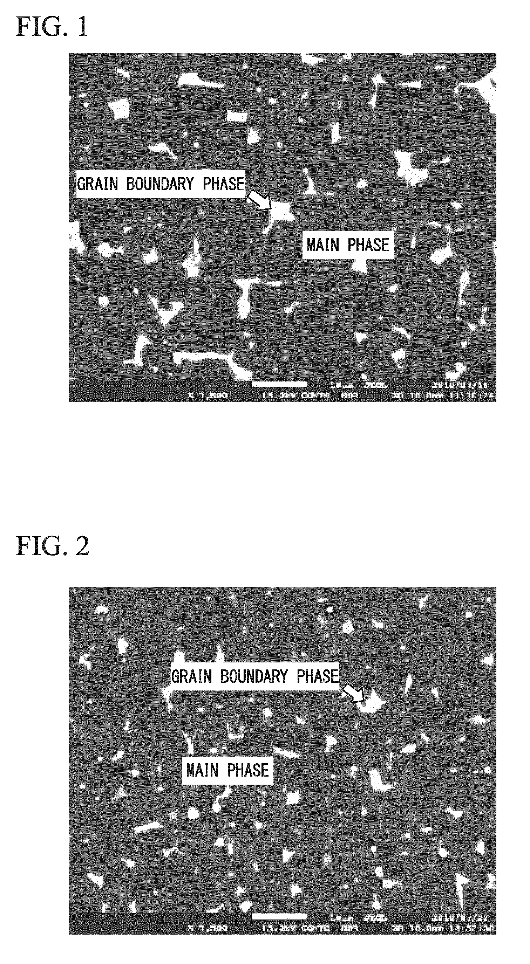

In addition, the cross-section of the R-T-B-based magnets according to Experimental Examples 3 and 4 were photographed by a scanning electron microscope (JEOL JSM-5310) to obtain backscattered electron images thereof. FIG. 1 is a backscattered electron image of the cross-section of an R-T-B-based magnet according to Experimental Example 3. FIG. 2 is a backscattered electron image of the cross-section of an R-T-B-based magnet according to Experimental Example 4. Experimental Example 3 was Comparative Example according to the present invention, which was obtained using the alloy material for the permanent magnet containing no metal powder. Experimental Example 4 was Example of the present invention.

As shown in FIG. 1 and FIG. 2, it was found that the R-T-B-based magnet of Experimental Example 4 obtained using the alloy material for the permanent magnet including the alloy B and the metal powder had a smaller size of the grain boundary phase and exhibited uniform dispersion of the grain boundary phase in the R-T-B-based magnet as compared to the R-T-B-based magnet of Experimental Example 3 obtained using the alloy material for the permanent magnet composed of the alloy B without the metal powder.
It can be presumed that if the alloy material for the permanent magnet includes the metal powder, the grain boundary phase readily comes around between main phase particles during sintering to readily disperse the grain boundary phases in the R-T-B-based magnet. It can be thought that when the main phase particles are covered with the grain boundary phases uniformly dispersed, the probability of the main phase particles adjacent to each other being electromagnetically isolated is enhanced to improve coercivity thereof.

### INDUSTRIAL APPLICABILITY

The alloy material for an R-T-B-based rare earth permanent magnet according to the present invention includes the R-T-B-based alloy in which the Dy content is more than 10 % by mass and less than 31 % by mass, and the metal powder. Therefore, when it is pressed, and followed by being sintered, it is readily possible to provide an R-T-B-based rare earth permanent magnet having sufficiently high coercivity (Hcj) and exhibiting excellent magnetic properties to be suitably used for a motor. Therefore, the alloy material for an R-T-B-based rare earth permanent magnet of the present invention is extremely useful industrially.

## Claims

1. An alloy material for an R-T-B-based rare earth permanent magnet composed of:
R being two or more members selected from rare earth elements;
T being a transition metal that essentially contains Fe;
B; and
unavoidable impurities, and
comprising: an R-T-B-based alloy in which the Dy content is more than 10 % by mass and less than 31 % by mass; and a metal powder.

2. The alloy material for the R-T-B-based rare earth permanent magnet according to Claim 1, wherein the metal powder is one member, or two or more members selected from the group consisting of Fe, Al, Co, Mo, Ta, Zr and W.

3. The alloy material for the R-T-B-based rare earth permanent magnet according to Claim 1 or 2, wherein the amount of the metal powder is 0.02 % by mass or more and less than 6 % by mass.

4. The alloy material for the R-T-B-based rare earth permanent magnet according to any one of Claims 1 to 3, wherein a powder composed of the R-T-B-based alloy and the metal powder is mixed to form a mixture thereof.

5. A method for producing an R-T-B-based rare earth permanent magnet comprising: pressing an alloy material for the R-T-B-based rare earth permanent magnet according to any one of Claims 1 to 4; and sintering the alloy material.

6. A motor provided with the R-T-B-based rare earth permanent magnet produced using the method for producing the R-T-B-based rare earth permanent magnet according to Claim 5.
